(19) Europäisches Patentamt
European Patent Office
Office européen des brevets

(11) EP 4 811 478 A1

(12) **EUROPEAN PATENT APPLICATION**
published in accordance with Art. 153(4) EPC

(43) Date of publication:
**23.09.2026 Bulletin 2026/39**

(21) Application number: **24910478.7**

(22) Date of filing: **27.11.2024**

(51) International Patent Classification (IPC):
***H01M 10/0525** (2010.01)* ***H01M 4/70** (2006.01)*
***H01M 4/66** (2006.01)* ***H01M 10/0567** (2010.01)*

(52) Cooperative Patent Classification (CPC):
Y02E 60/10

(86) International application number:
**PCT/CN2024/134760**

(87) International publication number:
**WO 2025/139545 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.12.2023 CN 202311795423**

(71) Applicant: **Zhuhai CosMX Battery Co., Ltd.**
**Zhuhai, Guangdong 519180 (CN)**

(72) Inventor: **ZHAO, Wei**
**Zhuhai, Guangdong 519180 (CN)**

(74) Representative: **Murgitroyd & Company**
**165-169 Scotland Street**
**Glasgow G5 8PL (GB)**

# (54) BATTERY

(57) A battery comprises a negative electrode plate and an electrolyte, wherein the negative electrode plate comprises a negative electrode current collector, and a negative electrode active material layer provided on the surface of one or both sides of the negative electrode current collector; the surface of the negative electrode current collector has protruding particles with an average height of A, in μm; the electrolyte comprises 1,3-propane sultone, and based on the total weight of the electrolyte, the content by weight of 1,3-propane sultone is B wt%; and the battery satisfies the following relation: $0.01 \leq B/A \leq 5$. The adhesion between the negative electrode current collector and the negative electrode active material layer of the battery can be improved with no or minimal loss in energy density, and thus the rate performance of the battery is improved.

SU3800 30.0kV 19.2mm x1.00k SE 08/27/2023
50.0μm

FIG. 1



Processed by Luminess, 75001 PARIS (FR)

## Description

## TECHNICAL FIELD

The present invention relates to the technical field of batteries, and in particular to a battery.

## BACKGROUND

Lithium-ion batteries have gained tremendous development in recent years due to their advantages such as high specific capacity, compact size, and the absence of a memory effect. Their scope of practical application continues to expand, ranging from batteries for small-scale electronic devices to energy storage batteries and power batteries for electric vehicles. Consequently, there are increasingly stringent requirements for the energy density and rate performance of lithium-ion batteries. Given the absence of significant breakthroughs in the current electrode material system, researchers have shifted their focus toward optimizing current collectors, electrolytes, and separators, among other aspects, to improve the energy density or rate performance of lithium-ion batteries.

Although copper is a superior current collector material, the direct coating of a negative electrode active material onto a copper current collector often suffers from poor adhesion. In the manufacturing process, battery manufacturers generally choose to subject copper current collectors to pretreatment, namely, carbon coating. By applying a carbon black slurry on the surface of the copper current collector using gravure rolls, the adhesion between the foil and the active material can be significantly improved, and thus the rate performance of the cell can also be improved. However, the carbon coating process not only increases the time and manufacturing costs for cell manufacturers, but also leads to increased overall thickness of the current collector, compromising the energy density of the cell. In addition, the carbon-coated copper foil is prone to issues such as missing coating.

## SUMMARY

To address the issues in the prior art, such as the loss of energy density, susceptibility to missing coating, and high costs resulting from the carbon coating process, the present invention provides a battery. In the battery of the present invention, missing coating is avoided and the adhesion between the negative electrode current collector and the negative electrode active material layer can also be improved with no or minimal loss in energy density, thereby improving the rate discharge performance of the battery.

The present invention provides a battery, comprising a negative electrode plate and an electrolyte, wherein the negative electrode plate comprises a negative electrode current collector, and a negative electrode active material layer provided on the surface of one or both sides of the negative electrode current collector; the surface of the negative electrode current collector has protruding particles with an average height of A, in μm; the electrolyte comprises 1,3-propane sultone, and based on the total weight of the electrolyte, the ' by weight of the 1,3-propane sultone is B wt%; and the battery satisfies the following relation: $0.01 \leq B/A \leq 1$.

By means of the technical solutions described above, the present invention has at least the following advantages over the prior art:

In the battery of the present invention, by limiting the relationship between the height of the protruding particles on the surface of the negative electrode current collector and the content of 1,3-propane sultone in the electrolyte, the negative electrode current collector and the negative electrode active material layer can be bonded in a riveting form, thereby improving the adhesion between the negative electrode current collector and the negative electrode active material layer, improving the rate performance of the battery, and reducing or even eliminating the loss of energy density of the battery.

Other features and advantages of the present invention will be described in detail in the Detailed Description of Embodiments hereinbelow.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

## BRIEF DESCRIPTION OF THE DRAWINGS

FIG. 1 shows an SEM image of the negative electrode current collector with protruding particles in the present

invention.

FIG. 2 shows infrared spectrum of the protruding particles on the surface of the negative electrode current collector in the present invention.

FIG. 3 shows an optical microscope image of the negative electrode current collector after the negative electrode active material layer is peeled off from the negative electrode plate in Example 1 of the present invention.

FIG. 4 shows an optical microscope image of the negative electrode current collector after the negative electrode active material layer is peeled off from the negative electrode plate in Comparative example 1 of the present invention.

FIG. 5 shows an optical microscope image of the negative electrode current collector after the negative electrode active material layer is peeled off from the negative electrode plate in Comparative example 2 of the present invention.

## DETAILED DESCRIPTIONS OF THE EMBODIMENTS

Hereinafter, specific embodiments of the present invention will be described in detail. It should be understood that the specific embodiments described herein are only used to illustrate and explain the present invention and are not used to limit the present invention. In the present invention, unless otherwise specified, all the numerical ranges are inclusive of the endpoints.

The present invention provides a battery, comprising a negative electrode plate and an electrolyte, wherein the negative electrode plate comprises a negative electrode current collector, and a negative electrode active material layer provided on the surface of one or both sides of the negative electrode current collector; the surface of the negative electrode current collector has protruding particles with an average height of A, in μm; the electrolyte comprises 1,3-propane sultone, and based on the total weight of the electrolyte, the content by weight of the 1,3-propane sultone is B wt%; and the battery satisfies the following relation: $0.01 \leq B/A \leq 5$.

The battery may satisfy the following relation: $0.01 \leq B/A \leq 5$ (e.g., 0.01, 0.05, 0.1, 0.2, 0.3, 0.4, 0.5, 0.6, 0.7, 0.8, 0.9, 1, 1.5, 2, 2.5, 3, 3.5, 4, 4.5, or 5).

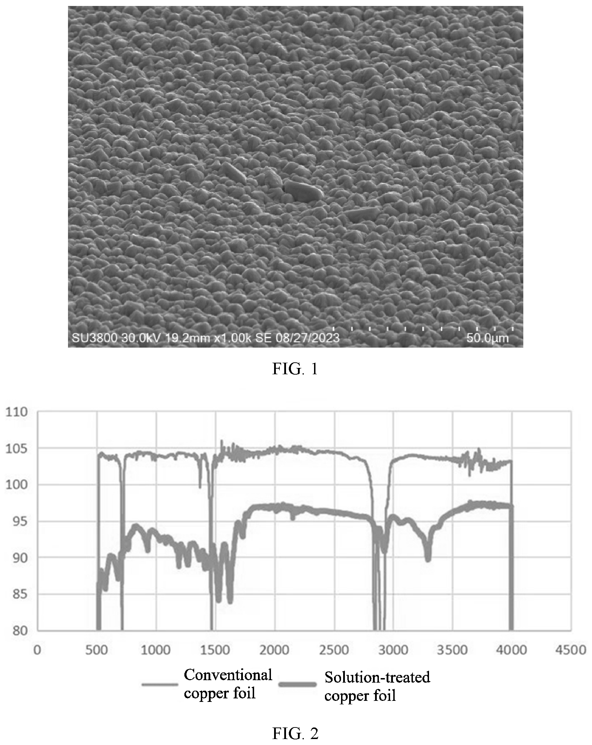

As shown in FIG. 1, the surface of the negative electrode current collector has protruding particles. The protruding particles increase the physical contact sites on the surface of the negative electrode current collector, and these contact sites can penetrate into the negative electrode active material layer, such that the negative electrode current collector and the negative electrode active material layer can be bonded in a riveting manner, thereby improving the adhesion between the negative electrode current collector and the negative electrode active material layer. Simultaneously, the protruding particles are beneficial for gas venting and heat dissipation of the battery, thereby improving the safety performance of the battery. In addition, after battery formation, by-products (e.g., lithium alkyl carbonates) generated from 1,3-propane sultone in the electrolyte can deposit between the negative electrode current collector and the negative electrode active material, which by-products are capable of improving the adhesion between the negative electrode current collector and the negative electrode active material. By limiting the content of 1,3-propane sultone in the electrolyte and the height of the protruding particles to satisfy the above specific relation, on the one hand, although the inclusion of 1,3-propane sultone in the electrolyte increases the viscosity of the electrolyte, the protruding particles on the surface of the negative electrode current collector in the present invention facilitate the redistribution of the electrolyte, thereby increasing the lithium-ion transport performance and improving the rate discharge performance of the battery; on the other hand, although the inclusion of 1,3-propane sultone in the electrolyte increases the impedance of the battery, the protruding particles on the surface of the negative electrode current collector in the present invention increase the surface area of the negative electrode current collector, leading to a greater number of active sites for the charge-discharge process of the battery, thereby mitigating the impedance increase induced by the addition of 1,3-propane sultone. When the B/A is less than 0.01, the content of 1,3-propane sultone in the electrolyte is too low or the height of the protruding particles is excessively high, which will cause the adhesion between the negative electrode current collector and the negative electrode active material to deteriorate. When the B/A is higher than 5, the content of 1,3-propane sultone in the electrolyte is too high or the height of the protruding particles is too low, such that the increased active sites provided by the protruding particles are insufficient to mitigate the impedance increase induced by the addition of 1,3-propane sultone, or even the reduction effect is insignificant, and meanwhile the adhesion between the negative electrode current collector and the negative electrode active material is deteriorated.

In the present invention, by controlling the protruding particles on the surface of the negative electrode current collector in the battery and the relationship between the protruding particles and 1,3- propane sultone in the electrolyte, the battery has achieved higher rate performance and lower energy density loss compared to the prior art. To further improve the effect, one or more technical features may be further optimized.

In an embodiment, $0.02 \leq B/A \leq 4$.

In an embodiment, 0.5 μm ≤ A μm ≤ 4 μm (e.g., 0.5 μm, 0.6 μm, 1 μm, 1.5 μm, 2 μm, 2.5 μm, 3 μm, 3.5 μm, 3.9 μm, or 4 μm).

In an embodiment, 1 μm ≤ A μm ≤ 3 μm.

In the present invention, the average height A of the protruding particles can be measured as follows: The cross-

section of the negative electrode current collector is bisected, with the central dashed line used as the baseline. The distance between the highest and lowest points of a protrusion on one side of the baseline is the height of the protruding particle. The mean of the height of the protruding particles in the negative electrode current collector is calculated to obtain the average height A of the protruding particles.

In an embodiment, the protruding particles are compressible. The compressible protruding particles are capable of reducing the cycling expansion rate of the battery during the charge-discharge process.

In an embodiment, 0.01 wt% $\leq$ B wt% $\leq$ 10 wt% (e.g., 0.26 wt%, 0.5 wt%, 1 wt%, 2 wt%, 3 wt%, 4 wt%, 5 wt%, 6 wt%, 7 wt%, 8 wt%, 9 wt%, 9.5 wt%, or 9.9 wt%).

In an embodiment, 0.03 wt% $\leq$ B wt% $\leq$ 5 wt%.

According to a specific embodiment, 0.01 $\leq$ B/A $\leq$ 5, 1 $\mu$m $\leq$ A $\mu$m $\leq$ 3 $\mu$m, and 0.03 wt% $\leq$ B wt% $\leq$ 5 wt%. When B/A, A and B are limited in the specified ranges above, the adhesion between the negative electrode current collector and the negative electrode active material layer can be further improved, the loss of energy density of the battery can be further reduced, and the rate discharge performance of the battery can be improved.

In an embodiment, the median particle size D50 of the protruding particles is 1 $\mu$m - 10 $\mu$m (e.g., 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, or 10 $\mu$m). By limiting the median particle size D50 of the protrusions within the specified range above, a strong riveting effect can be achieved between the negative electrode current collector and the negative electrode active material layer, and the energy density loss of the battery is reduced or even eliminated. When the median particle size of the protruding particles is lower than 1 $\mu$m or higher than 10 $\mu$m, the riveting effect will be deteriorated.

In an embodiment, the median particle size D50 of the protruding particles is 3 $\mu$m - 8 $\mu$m.

In the present invention, the median particle size D50 of the protruding particles represents the particle size corresponding to a cumulative particle size distribution percentage reaching 50% in the sample, which can be measured using a laser particle size distribution analyser.

It should be understood that in the present invention, the average height A of the protruding particles is different from the median particle size D50 thereof, and the average height A of the protruding particles is less than the median particle size D50 thereof.

In an embodiment, within any area of $2.5 \times 10^{-5}$ cm$^2$ on the surface of the negative electrode current collector, the number of the protruding particles with a particle size > 5 $\mu$m is N, and N is $\leq$ 3 (e.g., 3, 2, 1, or 0). When the particle size of the protruding particles exceeds 5 $\mu$m, such protruding particles with a large median particle size will affect the riveting effect between the negative electrode current collector and the negative electrode active material layer to some extent. Therefore, by limiting the quantity of these protruding particles with a large median particle size, the adhesion between the negative electrode current collector and the negative electrode active material layer can be further improved.

When N = 0, it indicates that within any area of $2.5 \times 10^{-5}$ cm$^2$ on the surface of the negative electrode current collector, there are no protruding particles with a particle size greater than 5 $\mu$m.

In an embodiment, the surface of the negative electrode current collector comprises an oxygen-containing functional group. After battery formation, the by-products (e.g., lithium alkyl carbonates) generated from 1,3-propane sultone in the electrolyte deposit between the negative electrode current collector and the negative electrode active material. The oxygen-containing functional groups on the surface of the negative electrode current collector can form intermolecular forces with the by-products, such that the adhesion between the negative electrode current collector and the negative electrode active material layer can be further increased, and such tighter bonding between the negative electrode current collector and the negative electrode active material can reduce the charge transfer impedance during the charge-discharge process of the battery, enabling more $Li^+$ to participate in the electrochemical reaction, which is conducive to the full release of capacity from the active material and improves the capacity utilization of the active material.

In an embodiment, the oxygen-containing functional group comprises one or more of a hydroxyl group (-OH), a carboxyl group (-COOH), and a carbonyl group (-CO-).

In an embodiment, in an infrared spectrum of the protruding particles on the surface of the negative electrode current collector, there is an absorption peak in the range of 1500 cm$^{-1}$ - 3600 cm$^{-1}$ (e.g., -OH, -COOH, and/or -CO-). As shown in FIG. 2, in the infrared spectrum of the protruding particles on the surface of the negative electrode current collector, there is an absorption peak in the range of 1500 cm$^{-1}$ - 3600 cm$^{-1}$, indicating the presence of an oxygen-containing functional group on the surface of the negative electrode current collector.

In an embodiment, the oxygen-containing functional group is a hydroxyl group. The hydroxyl group is a typical polar group that can form hydrogen bonds with water. Moreover, the negative electrode binder in the negative electrode active material layer is a water-based binder. Therefore, the negative electrode binder can form hydrogen bonds with the hydroxyl groups on the surface of the negative electrode current collector, which can further improve the adhesion between the negative electrode current collector and the negative electrode active material layer, thus enabling the negative electrode binder to act as a binder not only between the negative electrode active materials, but also between the negative electrode current collector and the negative electrode active material layer.

In an embodiment, in the infrared spectrum of the protruding particles on the surface of the negative electrode

current collector, there is an absorption peak in the range of 3200 $cm^{-1}$ - 3600 $cm^{-1}$ (e.g., at 3200 $cm^{-1}$, 3300 $cm^{-1}$, 3400 $cm^{-1}$, 3500 $cm^{-1}$, or 3600 $cm^{-1}$). In an infrared spectrum of the protruding particles on the surface of the negative electrode current collector, there is an absorption peak in the range of 3200 $cm^{-1}$ - 3600 $cm^{-1}$, indicating the presence of hydroxyl groups on the surface of the negative electrode current collector.

According to a specific embodiment, the oxygen-containing functional group is a hydroxyl group, and in the infrared spectrum of the protruding particles on the surface of the negative electrode current collector, there is an absorption peak in the range of 3200 $cm^{-1}$ - 3600 $cm^{-1}$.

In an embodiment, the negative electrode current collector has a dyne value of D, and $20 \leq D \leq 80$ (e.g., 20, 20.5, 25, 30, 35, 40, 45, 50, 55, 60, 65, 70, 75, 79, or 80). When the dyne value of the negative electrode current collector is limited within the specified range above, the spreading of the negative electrode active material layer on the surface of the negative electrode current collector can be improved. When the dyne value of the negative electrode current collector is lower than 20, the negative electrode current collector is prone to shrinkage, which is unfavourable for the coating of the negative electrode active material layer onto the surface of the negative electrode current collector, reducing the adhesion between the negative electrode current collector and the negative electrode active material layer.

In an embodiment, $35 \leq D \leq 60$.

In the present invention, the dyne value can be measured as follows: A line is drawn on the surface of the negative electrode current collector using a dyne pen of a specified specification. If the negative electrode current collector does not shrink within 10 s, it indicates that the negative electrode current collector has reached that dyne value.

In an embodiment, the negative electrode current collector has a tensile strength of E and an elongation at break of F, and $C = E \times F$, where C is 100-2500 (e.g., 100, 300, 500, 700, 1000, 1200, 1500, 1800, 2000, 2200, or 2500). When C is limited within the specified range above, the negative electrode current collector exhibits good flexibility, which facilitates the coating of the negative electrode active material layer onto the surface of the negative electrode current collector, improving the adhesion between the negative electrode current collector and the negative electrode active material layer. Additionally, it can improve the mechanical properties of the negative electrode current collector, allowing the negative electrode current collector less prone to deformation under mechanical impact or drop-weight impact, thereby improving the safety performance of the battery.

In an embodiment, C is 200-2000.

In the present invention, the tensile strength and elongation at break can be measured as follows: a sample of the negative electrode current collector with a width of 15 mm and a length of 200 mm (the initial length L0) is stretched using a tensile tester at a speed of 50 mm/min, and the tensile force output by the tester upon fracture is recorded to calculate the tensile strength. The length of the fractured negative electrode current collector is then measured and recorded as L1. The elongation at break =(L1-L0)/L0.

In an embodiment, the negative electrode active material layer comprises carbon element; and after peeling the negative electrode active material layer from the negative electrode current collector of the negative electrode plate, a residual negative electrode active material layer remains on the surface of the negative electrode current collector, and based on the total weight of the residual negative electrode active material layer, the content by weight Z of the carbon element is 50 wt% ≤ Z wt% ≤ 95 wt% (e.g., 51 wt%, 55 wt%, 60 wt%, 65 wt%, 70 wt%, 75 wt%, 80 wt%, 85 wt%, 89 wt%, 90 wt%, or 95 wt%). When Z meets the specified range above, it indicates strong adhesion between the negative electrode current collector and the negative electrode active material layer is strong, making the negative electrode active material layer difficult to peel off.

In an embodiment, 60 wt% ≤ Z wt% ≤ 90 wt%.

In an embodiment, the peel strength between the negative electrode current collector and the negative electrode active material layer is ≥ 0.8 N/m (e.g., 0.8 N/m, 0.85 N/m, 0.9 N/m, 0.95 N/m, 1 N/m, 1.05 N/m, 1.1 N/m, 1.2 N/m, 1.3 N/m, 1.4 N/m, or 1.5 N/m).

In an embodiment, 60 wt% ≤ Z ≤ 90 wt%, and the peel strength between the negative electrode current collector and the negative electrode active material layer is ≥ 0.8 N/m.

In the present invention, the peel strength can be obtained by a test method as following: adhesive tape is applied to both sides of the negative electrode plate, and the tensile force required to peel off the negative electrode active material layer from one side of the current collector is measured with a tensile tester. The output value from the tensile tester is the peel strength.

In an embodiment, the negative electrode current collector comprises a copper foil subjected to electroplating and/or solution treatment. For the copper foil subjected to electroplating and/or solution treatment, protruding particles may be formed on the surface of the copper foil, as shown in FIG. 1.

The electroplating treatment method may include the following steps: first, a copper-containing material is dissolved in a first solvent at room temperature to generate a copper-containing salt solution, and subsequently, through an electrolytic reaction, copper foil with protruding particles on the surface thereof is generated on the smooth surface of a cathode roller (e.g., a steel roller).

In an embodiment, the first solvent comprises one or more of a sulfuric acid solution, a hydrochloric acid solution,

and a nitric acid solution.

In an embodiment, the copper-containing material includes one or more of copper, a copper-containing alloy, and a copper oxide.

In an embodiment, the temperature of the electrolytic reaction is 10°C-100°C (e.g., 10°C, 20°C, 30°C, 40°C, 50°C, 60°C, 70°C, 80°C, 90°C, or 100°C), and the time is 0.5 h-3 h (e.g., 0.5 h, 1 h, 1.5 h, 2 h, 2.5 h, or 3 h).

The solution treatment method may include the following steps: Taking the treatment using a copper-ammonia solution as an example: at room temperature, an untreated copper foil is completely immersed in a copper-ammonia solution, where the pH of the copper-ammonia solution is 8-12 (e.g., 8, 9, 10, 11, or 12), and the immersion time is 0.5 h - 3 h (e.g., 0.5 h, 1 h, 1.5 h, 2 h, 2.5 h, or 3 h); and the residual solution on the surface of the copper foil is then washed with deionized water, and the copper foil is then naturally dried at room temperature to remove moisture, resulting in a copper foil with protruding particles on the surface thereof.

In an embodiment, the negative electrode active material layer comprises a negative electrode active material, a negative electrode binder, and a negative electrode conductive agent.

In an embodiment, the negative electrode active material comprises one or more of artificial graphite, natural graphite, mesocarbon microbeads, hard carbon, soft carbon, silicon-doped artificial graphite, and silicon- and oxygen-doped artificial graphite.

In an embodiment, the negative electrode binder comprises one or more of lithiated polyacrylic acid (Li-PAA), sodium carboxymethyl cellulose, styrene-butadiene latex, polyvinylidene fluoride (PVDF), polytetrafluoroethylene, and polyethylene oxide.

In an embodiment, the negative electrode conductive agent comprises one or more of conductive carbon black (SP), acetylene black, Ketjen black, conductive graphite, conductive carbon fibres, carbon nanotubes, metal powder, and carbon fibres.

In an embodiment, based on the total weight of the negative electrode active material layer, the content by weight of the negative electrode active material is 90 wt% - 99.5 wt% (e.g., 90 wt%, 91 wt%, 92 wt%, 93 wt%, 94 wt%, 95 wt%, 96 wt%, 97 wt%, 98 wt%, 99 wt%, or 99.5 wt%), the content by weight of the negative electrode binder is 0.5 wt% - 5 wt% (e.g., 0.5 wt%, 1 wt%, 1.5 wt%, 2 wt%, 2.5 wt%, 3 wt%, 3.5 wt%, 4 wt%, 4.5 wt%, or 5 wt%), and the content by weight of the negative electrode conductive agent is 0 wt% - 5 wt% (e.g., 0 wt%, 0.5 wt%, 1 wt%, 1.5 wt%, 2 wt%, 2.5 wt%, 3 wt%, 3.5 wt%, 4 wt%, 4.5 wt%, or 5 wt%).

In an embodiment, based on the total weight of the negative electrode active material layer, the content by weight of the negative electrode active material is 95 wt% - 98.5 wt%, the content by weight of the negative electrode binder is 1.5 wt% - 2.5 wt%, and the content by weight of the negative electrode conductive agent is 0 wt% - 2.5 wt%.

In an embodiment, the electrolyte has a viscosity V of 3 mPa·s - 8 mPa·s (e.g., 3 mPa·s, 3.5 mPa·s, 4 mPa·s, 4.5 mPa·s, 5 mPa·s, 5.5 mPa·s, 6 mPa·s, 6.5 mPa·s, 7mPa·s, 7.5mPa·s, or 8mPa·s). When the viscosity of the electrolyte is limited within the above specified range, the fluidity of the electrolyte can be improved, improving the lithium-ion transport capability; and meanwhile, the protruding particles on the surface of the negative electrode current collector are allowed to exert a disturbance effect to some extent, thereby boosting the kinetic performance of the battery.

In an embodiment, V is 4 mPa·s - 7 mPa·s.

In an embodiment, the electrolyte comprises a lithium salt, an organic solvent, and an additive.

In an embodiment, the lithium salt comprises one or more of lithium tetrafluoroborate, lithium hexafluorophosphate, lithium nitrate, lithium difluoro(oxalato)borate, lithium perchlorate, lithium difluorophosphate, lithium bis(fluorosulfonyl)imide, and lithium bis(trifluoromethanesulfonyl)imide.

In an embodiment, the organic solvent comprises one or more of fluorinated or unsubstituted carbonates, and fluorinated or unsubstituted carboxylates.

In an embodiment, the carbonate comprises one or more of ethylene carbonate, propylene carbonate, dimethyl carbonate, diethyl carbonate, and ethyl methyl carbonate.

In an embodiment, the carboxylate comprises one or more of propyl acetate, n-butyl acetate, isobutyl acetate, n-pentyl acetate, isopentyl acetate, propyl propionate, ethyl propionate, methyl butyrate, and ethyl n-butyrate.

In an embodiment, the additive comprises one or more of succinonitrile, adiponitrile, vinylene carbonate (VC), and 1,3,6-hexanetricarbonitrile.

In an embodiment, based on the total weight of the electrolyte, the content by weight of the lithium salt is 5 wt% - 15 wt% (e.g., 5 wt%, 7 wt%, 10 wt%, 12 wt%, or 15 wt%), the content by weight of the organic solvent is 70 wt% - 89 wt% (e.g., 70 wt%, 75 wt%, 80 wt%, 85 wt%, or 90 wt%), and the content by weight of the additive is 5 wt% - 15 wt% (e.g., 5 wt%, 7 wt%, 10 wt%, 12 wt%, or 15 wt%).

In an embodiment, based on the total weight of the electrolyte, the content by weight of the lithium salt is 6 wt% - 12 wt%, the content by weight of the organic solvent is 75 wt% - 87 wt%, and the content by weight of the additive is 6 wt% - 13 wt%.

In an embodiment, the battery comprises a positive electrode plate and a separator.

The positive electrode plate may be a conventional positive electrode plate in the art. For example, the positive

electrode plate comprises a positive electrode current collector, and a positive electrode active material layer coated on the surface of one or both sides of the positive electrode current collector, wherein the positive electrode active material layer comprises a positive electrode active material, a positive electrode conductive agent, and a positive electrode binder.

In an embodiment, the positive electrode current collector comprises one or more of an aluminium foil, nickel, stainless steel, and a composite current collector.

In an embodiment, the positive electrode active material includes one or more of lithium cobalt oxide, lithium manganese oxide, lithium iron phosphate, and a lithium transition metal oxide.

In an embodiment, the lithium transition metal oxide has a chemical formula of $Li_{1+x}Ni_yCo_zM_{(1-y-z)}O_2$, where $-0.1 \leq x \leq 1$; $0 \leq y \leq 1$, $0 \leq z \leq 1$, and $0 \leq y + z \leq 1$; and M is one or more of Mg, Zn, Ga, Ba, Al, Fe, Cr, Sn, V, Mn, Sc, Ti, Nb, Mo, and Zr.

In an embodiment, the positive electrode conductive agent includes one or more of conductive carbon black (SP), acetylene black, Ketjen black, conductive graphite, conductive carbon fibres, carbon nanotubes, metal powder, and carbon fibres.

In an embodiment, the positive electrode binder includes one or more of lithiated polyacrylic acid (Li-PAA), sodium carboxymethyl cellulose, styrene-butadiene latex, polyvinylidene fluoride (PVDF), polytetrafluoroethylene, and polyethylene oxide.

In an embodiment, based on the total weight of the positive electrode active material layer, the content of the positive electrode active material is 80 wt% - 99.8 wt% (e.g., 80 wt%, 85 wt%, 90 wt%, 95 wt%, 99 wt%, or 99.8 wt%), the content of the positive electrode conductive agent is 0.1 wt% - 10 wt% (e.g., 0.1 wt%, 0.5 wt%, 1 wt%, 3 wt%, 5 wt%, 7 wt%, or 10 wt%), and the content of the positive electrode binder is 0.1 wt% - 10 wt% (e.g., 0.1 wt%, 0.5 wt%, 1 wt%, 3 wt%, 5 wt%, 7 wt%, or 10 wt%).

In an embodiment, based on the total weight of the positive electrode active material layer, the content of the positive electrode active material is 90 wt% - 99.6 wt%, the content of the positive electrode conductive agent is 0.2 wt% - 5 wt%, and the content of the positive electrode binder is 0.2 wt% - 5 wt%.

The separator may be a conventional separator in the art. For example, the separator includes one or more of a single-layer PE (polyethylene), a single-layer PP (polypropylene), a PP/PE/PP composite film, and a composite ceramic separator.

In an embodiment, the battery is a lithium-ion battery.

In an embodiment, the battery is a lithium-ion secondary battery.

The present invention will be described in detail below by means of examples. The examples described in the present invention are only some, rather than all, of the examples of the present invention. Based on the examples of the present invention, all other examples obtained by those of ordinary skill in the art without creative efforts fall within the scope of protection of the present invention.

The following examples are used to illustrate the battery of the present invention.

Example 1

(1) Negative electrode plate

Preparation of negative electrode current collector

1) Preparation of copper-ammonia solution: copper sulphate was dissolved in deionized water at a ratio of 1 : 80, and ammonia water was slowly added with continuous stirring, initially forming a light blue precipitate. Then, ammonia water was further added, the precipitate was dissolved, and the solution turned into a clear blue liquid. Ammonia water was then further added dropwise until pH = 10, followed by filtration to remove undissolved precipitates.

2) At room temperature, a copper foil was completely immersed in the copper-ammonia solution for 1 h, and the residual solution on the surface of the copper foil was washed with deionized water. The copper foil was naturally dried at room temperature to remove moisture, resulting in a negative electrode current collector with protruding particles on the surface thereof.

Preparation of negative electrode active material slurry: 97.3% by mass of a negative electrode active material (graphite), 0.5% of a negative electrode conductive agent (conductive carbon black), 1.3% of a binder (styrene-butadiene rubber), and 0.9% of a dispersant (sodium carboxymethyl cellulose) were mixed until uniform, and an appropriate amount of deionized water was then added until uniformly dispersed to prepare a negative electrode active material slurry.

The negative electrode active material layer slurry was coated on the surface of both sides of the negative electrode current collector to form a negative electrode active material layer, followed by baking and rolling to obtain a negative electrode plate.

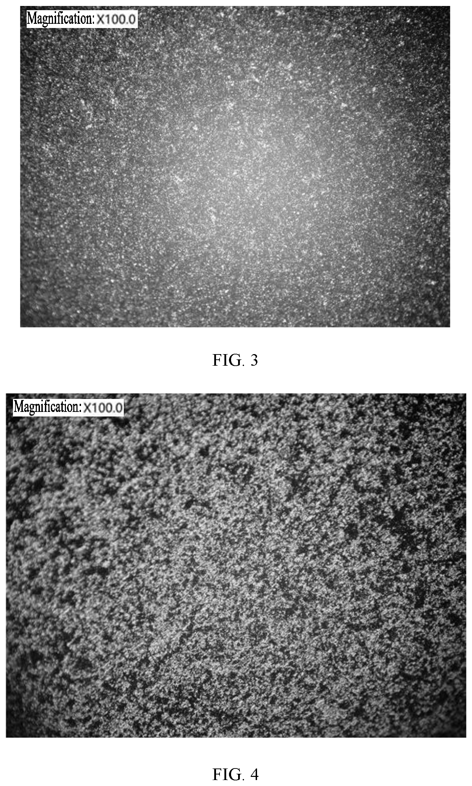

As can be seen in FIG. 3, upon peeling off the negative electrode active material layer from the negative electrode plate, a large amount of the negative electrode active material remained on the negative electrode current collector.

(2) Positive electrode plate

Conductive carbon black and carbon nanotubes were added to a PVDF binder solution and mixed uniformly. Then, lithium cobalt oxide was added and stirred uniformly to prepare a positive electrode active material slurry. The positive electrode active material slurry was coated on the surface of both sides of a positive electrode current collector to form a positive electrode active material layer, followed by baking and rolling to obtain a positive electrode plate. The mass fraction of the positive electrode active material (lithium cobalt oxide) in the positive electrode active material layer was 97.6%, the mass fraction of the positive electrode binder (PVDF) was 1.05%, and the mass fraction of the positive electrode conductive agent (conductive carbon black and carbon nanotubes, with the mass ratio of carbon black to carbon nanotubes being 1 : 1) was 1.35%.

(3) Electrolyte

In a glove box filled with argon gas ($H_2O$ < 0.1 ppm, $O_2$ < 0.1 ppm), the organic solvents were uniformly mixed, and then a thoroughly dried lithium salt was added thereto rapidly, and after the salt was dissolved, PS and an additive were added to obtain the desired electrolyte. 10 parts by weight of the lithium salt (lithium hexafluorophosphate), 1 part by weight of 1,3-propane sultone (PS) , 85 parts by weight of the organic solvents (40 parts by weight of ethylene carbonate (EC), 40 parts by weight of diethyl carbonate (DEC), and 5 parts by weight of fluoroethylene carbonate (FEC)), and 4 parts by weight of the additive (vinylene carbonate (VC)) were involved.

(4) Separator

A separator comprising a PP/PE substrate with a single-side ceramic coating and double-side PVDF adhesive coatings was used. The thickness of the base film was 5 μm, the thickness of the ceramic layer was 2 μm, and the thickness of each adhesive layer was 1 μm.

(5) Preparation of battery

The negative electrode plate from step (1), the positive electrode plate from step (2), and the separator from step (4) were stacked in the order of the positive electrode plate, the separator, and the negative electrode plate, and then wound to obtain a cell. The cell was placed into an aluminium foil packaging, and the electrolyte from step (3) was injected into the packaging, followed by processes including vacuum sealing, leaving to stand, formation, shaping, sorting, etc., to obtain a lithium-ion battery.

Example 2

This example was carried out with reference to Example 1, except that B% and A were changed. See Table 1 for details.

Example 3 group

This example group was intended to illustrate the effect of changing B%.

This example group was carried out with reference to Example 1, except that B% was changed. See Table 1 for details.

Example 4 group

This example group was intended to illustrate the effect of changing A.

This example group was carried out with reference to Example 1, except that A was changed. See Table 1 for details.

Example 5 group

This example group was intended to illustrate the effects of changing the D50 of the protruding particles.

This example group was carried out with reference to Example 1, except that the D50 of the protruding particles

was changed. See Table 1 for details.

Example 6 group

This example group was intended to illustrate the effects of changing the absorption peak positions in the infrared spectrum of the protruding particles on the surface of the negative electrode current collector.

This example group was carried out with reference to Example 1, except that the absorption peak position in the infrared spectrum of the protruding particles on the surface of the negative electrode current collector was changed. See Table 1 for details.

Example 7 group

This example group was intended to illustrate the effects of changing D.

This example group was carried out with reference to Example 1, except that D was changed. See Table 1 for details.

Example 8 group

This example group was intended to illustrate the effects of changing C.

This example group was carried out with reference to Example 1, except that C was changed. See Table 1 for details.

Comparative example 1

This comparative example was carried out with reference to Example 1, except that the negative electrode current collector was replaced with a conventional copper foil. See Table 1 for details.

As can be seen in FIG. 4, upon peeling off the negative electrode active material layer from the negative electrode plate, a small amount of the negative electrode active material remained on the negative electrode current collector.

Comparative example 2

This comparative example was carried out with reference to Example 1, except that the negative electrode current collector was replaced with a carbon-coated copper foil. See Table 1 for details.

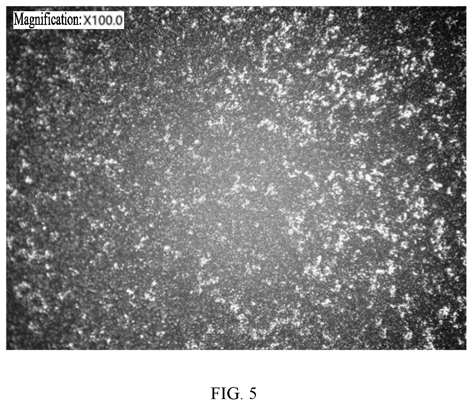

As can be seen in FIG. 5, upon peeling off the negative electrode active material layer from the negative electrode plate, a large amount of the negative electrode active material remained on the negative electrode current collector.

Comparative example 3

This comparative example was carried out with reference to Example 1, except that 1,3-propane sultone was not added to the electrolyte. See Table 1 for details.

Comparative example 4

This comparative example was carried out with reference to Example 1, except that 1,3-propane sultone was replaced with the same parts by weight of DTD. See Table 1 for details.

Comparative example 5

This comparative example was carried out with reference to Example 1, except that B% was changed such that $B/A < 0.01$. See Table 1 for details.

Comparative example 6

This comparative example was carried out with reference to Example 1, except that A was changed such that $B/A > 5$. See Table 1 for details.

Table 1

| | B/% | V/(mPa·s) | A/μm | B/A | D50 of protruding particles/μm | N | Absorption peak position in infrared spectrum/($cm^{-1}$) | Oxygen-containing functional group | D | C | Z/% | Peel strength/( N/m) |
|---|---|---|---|---|---|---|---|---|---|---|---|---|
| Example 1 | 1 | 5.5 | 2 | 0.5 | 5 | 0 | 3300 | Hydroxyl | 35 | 916.2 | 85 | 0.96 |
| Example 2 | 20 | 7.1 | 4 | 5 | * | * | * | * | * | * | 80 | 0.87 |
| Example 3a | 0.03 | 4.2 | 2 | 0.015 | * | * | * | * | * | * | 81 | 0.85 |
| Example 3b | 5 | 6 | 2 | 2.5 | * | * | * | * | * | * | 82 | 0.88 |
| Example 3c | 10 | 6.5 | 2 | 5 | * | * | * | * | * | * | 75 | 0.83 |
| Example 4a | 1 | * | 1 | 1 | * | * | * | * | * | * | 84 | 0.92 |
| Example 4b | 1 | * | 3 | 0.33 | * | * | * | * | * | * | 85 | 0.94 |
| Example 4c | 1 | * | 0.5 | 2 | * | * | * | * | * | * | 76 | 0.85 |
| Example 4d | 1 | * | 4 | 0.25 | * | * | * | * | * | * | 71 | 0.84 |
| Example 4e | 1 | * | 5 | 0.2 | * | * | * | * | * | * | 60 | 0.82 |
| Example 5a | * | * | * | * | 3 | * | * | * | * | * | 84 | 0.93 |
| Example 5b | * | * | * | * | 8 | 1 | * | * | * | * | 83 | 0.90 |
| Example 5c | * | * | * | * | 1 | * | * | * | * | * | 80 | 0.82 |
| Example 5d | * | * | * | * | 10 | 3 | * | * | * | * | 74 | 0.81 |
| Example 5e | * | * | * | * | 0.1 | * | * | * | * | * | 68 | 0.80 |
| Example 5f | * | * | * | * | 15 | 5 | * | * | * | * | 70 | 0.81 |
| Example 6a | * | * | * | * | * | * | 3300/1800 | Hydroxyl and carboxyl | * | * | 80 | 0.90 |
| Example 6b | * | * | * | * | * | * | 3300/1800/1730 | Hydroxyl, carboxyl and carbonyl | * | * | 78 | 0.88 |
| Example 6c | * | * | * | * | * | * | 1730 | Carboxyl | * | * | 72 | 0.83 |
| Example 7a | * | * | * | * | * | * | * | * | 40 | * | 86 | 0.92 |
| Example 7b | * | * | * | * | * | * | * | * | 60 | * | 82 | 0.89 |
| Example 7c | * | * | * | * | * | * | * | * | 20 | * | 79 | 0.85 |
| Example 7d | * | * | * | * | * | * | * | * | 80 | * | 72 | 0.81 |

(continued)

| | B/% | V/(mPa·s) | A/μm | B/A | D50 of protruding particles/μm | N | Absorption peak position in infrared spectrum/($cm^{-1}$) | Oxygen-containing functional group | D | C | Z/% | Peel strength/( N/m) |
|---|---|---|---|---|---|---|---|---|---|---|---|---|
| Example 7e | * | * | * | * | * | * | * | * | 10 | * | 61 | 0.8 |
| Example 8a | * | * | * | * | * | * | * | * | * | 203.4 | 84 | 0.95 |
| Example 8b | * | * | * | * | * | * | * | * | * | 1982 | 84 | 0.94 |
| Example 8c | * | * | * | * | * | * | * | * | * | 117.3 | 79 | 0.85 |
| Example 8d | * | * | * | * | * | * | * | * | * | 2496.1 | 75 | 0.84 |
| Example 8e | * | * | * | * | * | * | * | * | * | 49.8 | 72 | 0.82 |
| Example 8f | * | * | * | * | * | * | * | * | * | 3029 | 70 | 0.81 |
| Comparative example 1 | * | * | - | - | - | - | - | - | 32 | 624 | 44 | 0.62 |
| Comparative example 2 | * | * | - | - | - | - | - | - | 48 | 833.5 | 86 | 0.96 |
| Comparative example 3 | - | 5 | * | - | * | * | * | * | * | * | 33 | 0.51 |
| Comparative example 4 | - | 5.5 | * | - | * | * | * | * | * | * | 40 | 0.58 |
| Comparative example 5 | 0.01 | 4 | 2 | 0.005 | * | * | * | * | * | * | 35 | 0.53 |
| Comparative example 6 | 1 | * | 0.1 | 10 | * | * | * | * | * | * | 38 | 0.55 |
| * indicates the same as in Example 1; and<br>- indicates the absence. | | | | | | | | | | | | |

Test examples

The batteries obtained in the examples and comparative examples were tested as follows.

1. Test of cycling performance

The battery was placed in a constant temperature chamber at 45°C, discharged at 1 C to the lower limit voltage (3.0 V) of the battery, charged at 1.5 C to the upper limit voltage (4.5 V) of the battery, and discharged again at 1 C to the lower limit voltage. The above three charge/discharge operations constituted one test cycle. The discharge capacity retention rate of the battery was calculated after 800 such cycles. The initial discharge capacity was Q1, and the discharge capacity after 800 cycles was Q2, then the discharge capacity retention rate = (Q2/Q1) * 100%.

2. Test of rate performance

The battery was placed in a constant temperature chamber at the target temperature (25°C), discharged at 1 C to the lower limit voltage of the battery, charged at 1.5 C to the upper limit voltage of the battery, and discharged again at 1 C to the lower limit voltage.

Rate discharge retention rate = 1 C discharge capacity/0.2 C discharge capacity * 100%.

3. Test of energy density

The battery was charged at a constant current of 0.2 C to 4.5 V, and then charged at a constant voltage to 0.025 C to achieve a full charge of the battery. Next, the battery was discharged at a constant current of 0.2 C until the voltage decreased to 3 V. The total capacity discharged during the discharge process was recorded as C, and the actual volume V of the battery was calculated.

ED (energy density) = discharge capacity C * voltage plateau / cell volume V

For a 4.5 V system, the plateau voltage was typically 3.9 V.

ED loss rate (energy density loss rate) = ED difference / ED of battery in Comparative Example 1 * 100%.

4. Room-temperature cycling expansion rate

The battery was placed in a constant temperature chamber at 25°C, discharged at 1 C to the lower limit voltage (3.0 V) of the battery, charged at 1.5 C to the upper limit voltage (4.5 V) of the battery, and discharged again at 1 C to the lower limit voltage. The above three charge/discharge operations constituted one test cycle. The discharge capacity retention rate of the battery was calculated after 800 such cycles. With initial thickness of the battery being HI, and the thickness of the battery after 800 cycles being H2, the cycling expansion rate = ((H2 - H1)/H1) * 100%.

5. Low-temperature discharge performance

After the battery was fully charged (100% SOC), the discharge capacity at 0.2 C at room temperature (25°C) was C1. After being fully charged and allowed to stand at -20°C for 4 h, the discharge capacity at 0.2 C was C2. The low-temperature discharge capacity retention rate = C2/C1 * 100%.

The results obtained are recorded in Table 2.

Table 2

| | 1C-rate discharge capacity retention rate/% | Capacity retention rate after 800 cycles at 45°C/% | ED loss rate/% | Expansion rate after 800 cycles at room temperature/% | Low-temperature discharge capacity retention rate/% |
|---|---|---|---|---|---|
| Example 1 | 98.5 | 88.96 | 0.2 | 9.0 | 84.58 |
| Example 2 | 97.3 | 80.32 | 0.5 | 9.3 | 78.19 |

(continued)

| | 1C-rate discharge capacity retention rate/% | Capacity retention rate after 800 cycles at 45°C/% | ED loss rate/% | Expansion rate after 800 cycles at room temperature/% | Low-temperature discharge capacity retention rate/% |
|---|---|---|---|---|---|
| Example 3a | 98.0 | 86.48 | 0.3 | 8.8 | 80.72 |
| Example 3b | 98.4 | 87.76 | 0.2 | 8.9 | 83.14 |
| Example 3c | 97.6 | 85.13 | 0.2 | 9.0 | 79.51 |
| Example 4a | 98.6 | 87.57 | 0.2 | 8.5 | 82.25 |
| Example 4b | 98.2 | 87.34 | 0.3 | 8.7 | 81.48 |
| Example 4c | 97.9 | 85.00 | 0.5 | 9.0 | 80.62 |
| Example 4d | 98.0 | 84.29 | 0.3 | 9.2 | 79.86 |
| Example 4e | 96.8 | 82.67 | 0.7 | 9.1 | 79.22 |
| Example 5a | 98.4 | 88.24 | 0.4 | 8.9 | 81.82 |
| Example 5b | 98.0 | 87.76 | 0.3 | 8.9 | 80.63 |
| Example 5c | 98.1 | 84.51 | 0.2 | 8.5 | 81.37 |
| Example 5d | 97.9 | 83.68 | 0.4 | 8.4 | 80.48 |
| Example 5e | 97.8 | 81.27 | 0.2 | 9.0 | 79.29 |
| Example 5f | 96.5 | 80.59 | 0.5 | 9.3 | 78.72 |
| Example 6a | 98.3 | 86.64 | 0.3 | 9.0 | 80.14 |
| Example 6b | 97.7 | 84.57 | 0.5 | 9.3 | 79.43 |
| Example 6c | 97.3 | 80.91 | 0.4 | 9.5 | 78.08 |
| Example 7a | 98.2 | 87.02 | 0.2 | 9.2 | 83.56 |
| Example 7b | 98.0 | 86.83 | 0.5 | 9.3 | 81.38 |
| Example 7c | 97.3 | 84.66 | 0.4 | 9.5 | 76.52 |
| Example 7d | 97.9 | 85.12 | 0.5 | 9.7 | 79.55 |
| Example 7e | 96.0 | 83.46 | 0.3 | 9.8 | 75.00 |
| Example 8a | 98.1 | 88.25 | 0.5 | 9.1 | 80.94 |
| Example 8b | 98.0 | 87.49 | 0.4 | 9.0 | 82.28 |
| Example 8c | 97.6 | 83.51 | 0.4 | 8.6 | 76.42 |
| Example 8d | 97.8 | 84.17 | 0.2 | 8.9 | 76.05 |
| Example 8e | 96.3 | 80.34 | 0.4 | 9.4 | 74.32 |
| Example 8f | 96.4 | 81.45 | 0.3 | 9.5 | 75.44 |
| Comparative example 1 | 95.9 | 78.27 | / | 10.8 | 72.23 |
| Comparative example 2 | 97.7 | 81.16 | 1.1 | 10.5 | 78.01 |
| Comparative example 3 | 95.7 | 78.34 | 0.6 | 10.1 | 71.58 |
| Comparative example 4 | 95.4 | 77.89 | 0.4 | 9.9 | 72.84 |
| Comparative example 5 | 96.0 | 79.04 | 0.5 | 10.4 | 74.19 |
| Comparative example 6 | 96.1 | 74.91 | 0.3 | 10.3 | 73.31 |

As shown in Table 2, it can be seen from the comparative examples and the examples that the batteries in the examples exhibit increased 1C-rate discharge capacity retention rate, increased capacity retention rate after 800 cycles at

45°C, reduced ED loss, lower expansion rate after 800 cycles at room temperature, and improved low-temperature discharge capacity retention rate. This indicates that by providing the surface of the negative electrode current collector with protruding particles and by limiting the specific relationship between the protruding particles and the 1,3-propane sultone in the electrolyte, the battery of the present invention has improved rate performance and reduced energy density loss.

The preferred embodiments of the present invention have been described in detail above; however, the present invention is not limited thereto. Within the technical concept of the present invention, various simple modifications can be made to the technical solution of the present invention, including the combination of various technical features in any other suitable way. These simple modifications and combinations should also be regarded as the content disclosed by the present invention and all fall within the scope of protection of the present invention.

## Claims

1. A battery, **characterized by** comprising a negative electrode plate and an electrolyte, wherein the negative electrode plate comprises a negative electrode current collector, and a negative electrode active material layer provided on the surface of one or both sides of the negative electrode current collector; the surface of the negative electrode current collector has protruding particles with an average height of A, in μm; the electrolyte comprises 1,3-propane sultone, and based on the total weight of the electrolyte, the content by weight of the 1,3-propane sultone is B wt%; and the battery satisfies the following relation: $0.01 \leq B/A \leq 5$.

2. The battery according to claim 1, **characterized in that** $0.02 \leq B/A \leq 4$; and/or

$$0.5\ \mu m \leq A\ \mu m \leq 4\ \mu m;$$

and/or

$$0.01\ wt\% \leq B\ wt\% \leq 10\ wt\%.$$

3. The battery according to claim 1 or 2, **characterized in that** $1\ \mu m \leq A\ \mu m \leq 3\ \mu m$; and/or

$$0.03\ wt\% \leq B\ wt\% \leq 5\ wt\%.$$

4. The battery according to any one of claims 1-3, **characterized in that** the protruding particles have a median particle size D50 of 1 μm - 10 μm; and/or
within any area of $2.5 \times 10^{-5}$ $cm^2$ on the surface of the negative electrode current collector, the number of the protruding particles with a particle size > 5 μm is N, and N is ≤ 3.

5. The battery according to any one of claims 1-4, **characterized in that** the surface of the negative electrode current collector comprises an oxygen-containing functional group, and the oxygen-containing functional group comprises one or more of a hydroxyl group, a carboxyl group, and a carbonyl group; and/or
in an infrared spectrum of the protruding particles on the surface of the negative electrode current collector, there is an absorption peak in the range of 1500 $cm^{-1}$ - 3600 $cm^{-1}$.

6. The battery according to claim 5, **characterized in that** the oxygen-containing functional group is a hydroxyl group; and/or
in an infrared spectrum of the protruding particles on the surface of the negative electrode current collector, there is an absorption peak in the range of 3200 $cm^{-1}$ - 3600 $cm^{-1}$.

7. The battery according to any one of claims 1-6, **characterized in that** the negative electrode current collector has a dyne value of D, and $20 \leq D \leq 80$.

8. The battery according to claim 7, **characterized in that** $35 \leq D \leq 60$.

9. The battery according to any one of claims 1-8, **characterized in that** the negative electrode current collector has a tensile strength of E and an elongation at break of F, and $C = E \times F$, where C is 100-2500.

**10.** The battery according to claim 9, **characterized in that** C is 200-2000.

**11.** The battery according to any one of claims 1-10, **characterized in that** the negative electrode active material layer comprises carbon element; and after peeling the negative electrode active material layer from the negative electrode current collector of the negative electrode plate, a residual negative electrode active material layer remains on the surface of the negative electrode current collector, and based on the total weight of the residual negative electrode active material layer, the content by weight Z wt% of the carbon element is 50 wt% ≤ Z wt% ≤ 95 wt%; and/or
a peel strength between the negative electrode current collector and the negative electrode active material layer is ≥ 0.8 N/m.

**12.** The battery according to any one of claims 1-11, **characterized in that** the negative electrode current collector comprises a copper foil subjected to electroplating and/or solution treatment.

**13.** The battery according to any one of claims 1-12, **characterized in that** the electrolyte has a viscosity V of 3 mPa·s - 8 mPa·s.

**14.** The battery according to claim 13, **characterized in that** the viscosity V of the electrolyte is 4 mPa·s - 7 mPa·s.

**15.** The battery according to any one of claims 1-14, **characterized in that** the battery is a lithium-ion secondary battery.

SU3800 30.0kV 19.2mm x1.00k SE 08/27/2023
50.0µm

FIG. 1

110
105
100
95
90
85
80
0
500
1000
1500
2000
2500
3000
3500
4000
4500
Conventional copper foil
Solution-treated copper foil

FIG. 2

Magnification: X100.0

FIG. 3

Magnification: X100.0

FIG. 4

Magnification: X100.0

FIG. 5

**INTERNATIONAL SEARCH REPORT**

International application No. **PCT/CN2024/134760**

**A. CLASSIFICATION OF SUBJECT MATTER**

H01M10/0525(2010.01)i; H01M4/70(2006.01)i; H01M4/66(2006.01)i; H01M10/0567(2010.01)i

According to International Patent Classification (IPC) or to both national classification and IPC

**B. FIELDS SEARCHED**

Minimum documentation searched (classification system followed by classification symbols)

IPC/CPC: H01M

Documentation searched other than minimum documentation to the extent that such documents are included in the fields searched

Electronic data base consulted during the international search (name of data base and, where practicable, search terms used)

CNABS, CNTXT, ENTXT, DWPI, CNKI: 电池, 负极片, 电解液, 凸起, 颗粒, 高度, 丙烷磺酸内酯, battery, negative plate, electrolyte, convex, particles, propane sultone

**C. DOCUMENTS CONSIDERED TO BE RELEVANT**

| Category* | Citation of document, with indication, where appropriate, of the relevant passages | Relevant to claim No. |
|---|---|---|
| PX | CN 117525547 A (ZHUHAI COSMX BATTERY CO., LTD.) 06 February 2024 (2024-02-06) description, paragraphs 4-81, and embodiments 1-8 | 1-15 |
| A | CN 107681116 A (CONTEMPORARY AMPEREX TECHNOLOGY CO., LTD.) 09 February 2018 (2018-02-09) entire description | 1-15 |
| A | CN 116802877 A (XIAMEN XINNENG'AN TECHNOLOGY CO., LTD.) 22 September 2023 (2023-09-22) entire description | 1-15 |
| A | CN 103199261 A (CHANGCHUN JLU KENUO SCIENCE & TECHNOLOGY CO., LTD.) 10 July 2013 (2013-07-10) entire description | 1-15 |
| A | CN 213845326 U (TIANJIN RISESUN MGL NEW ENERGY TECHNOLOGY CO., LTD.) 30 July 2021 (2021-07-30) entire description | 1-15 |
| A | JP 7289414 B1 (FURUKAWA BATTERY CO., LTD.) 09 June 2023 (2023-06-09) entire description | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 February 2025** | **21 February 2025** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2024/134760

C. DOCUMENTS CONSIDERED TO BE RELEVANT

| Category* | Citation of document, with indication, where appropriate, of the relevant passages | Relevant to claim No. |
|---|---|---|
| A | US 2010086856 A1 (MITSUBISHI CHEMICAL CORP.) 08 April 2010 (2010-04-08) entire description | 1-15 |

Form PCT/ISA/210 (second sheet) (July 2022)

**INTERNATIONAL SEARCH REPORT**
**Information on patent family members**

International application No.
**PCT/CN2024/134760**

| Patent document cited in search report | | | Publication date (day/month/year) | Patent family member(s) | | | Publication date (day/month/year) |
|---|---|---|---|---|---|---|---|
| CN | 117525547 | A | 06 February 2024 | None | | | |
| CN | 107681116 | A | 09 February 2018 | WO | 2018024203 | A1 | 08 February 2018 |
| CN | 116802877 | A | 22 September 2023 | None | | | |
| CN | 103199261 | A | 10 July 2013 | None | | | |
| CN | 213845326 | U | 30 July 2021 | None | | | |
| JP | 7289414 | B1 | 09 June 2023 | JP | 2024115242 | A | 26 August 2024 |
| US | 2010086856 | A1 | 08 April 2010 | JP | 2008181870 | A | 07 August 2008 |
| | | | | JP | 5268018 | B2 | 21 August 2013 |
| | | | | US | 8431270 | B2 | 30 April 2013 |
| | | | | KR | 20090094818 | A | 08 September 2009 |
| | | | | KR | 101441712 | B1 | 17 September 2014 |
| | | | | EP | 2128916 | A1 | 02 December 2009 |
| | | | | EP | 2128916 | A4 | 30 November 2016 |
| | | | | WO | 2008084675 | A1 | 17 July 2008 |

Form PCT/ISA/210 (patent family annex) (July 2022)